# EUROPEAN PATENT APPLICATION

(11) **EP 4 769 259 A1**
(43) Date of publication of application: **01.07.2026**
(21) Application number: 25227154.9
(22) Date of filing: 24.12.2025
(51) Int. Cl.: G06Q 10/04, G06N 20/00, G06Q 40/06

(54) **MACHINE LEARNING BASED SYSTEM AND METHOD FOR AUTOMATICALLY REDISTRIBUTING DATA**

(30) Priority: 30.12.2024 US 202419004519
(71) Applicant: Highradius Corporation, Houston, TX 77042 (US)
(72) Inventor: Kunwar, Anupam, 500081 Hyderabad (IN); Mandal, Somsuvro, 500081 Hyderabad (IN); Chordia, Anvesh, 500081 Hyderabad (IN); Kumar, Ayush, 500081 Hyderabad (IN); Behera, Manas Chandan, 500081 Hyderabad (IN)
(74) Representative: Caldon, Giuliano

(57) **Abstract**

A machine learning based (ML-based) method and system for redistributing data, is disclosed. Initially, an input data associated actual bank cash is obtained from data sources. The input data is pre-processed to generate pre-processed data. A month level data associated with the actual bank cash is predicted for a pre-determined horizon based on at least one of: historical cash flow data and seasonality, using machine learning (ML) models on the pre-processed data. At least one of: the month level data to week of month (WOM) level data and the WOM level data to day level data, is redistributed based on a pro-rata configuration using hyperparameters. At least one of: the WOM level data and the day level data, redistributed from the month level data, is provided as an output, to the users on user interfaces associated with electronic devices associated with the users.

## Description

### FIELD OF INVENTION

Embodiments of the present disclosure relate to machine learning based (ML-based) systems, and more particularly relates to a ML-based method and system for automatically redistributing data associated with actual bank cash.

### BACKGROUND

Redistributing cash flow from a month-level granularity to a week-level granularity is a key technique in financial forecasting. This redistribution process refines cash flow projections, enabling more precise weekly forecasting that supports decision-making, resource planning, and liquidity management, in finance fields.

The redistribution process assists in forecasting cash flow i.e., a prediction of future inflows and outflows of cash to ensure financial stability and make informed decisions. Typically, forecasting month level cash flow is broad, providing cumulative totals but lacking finer temporal details. However, redistributing the month level cash flow to week level cash flow that may allow for more detailed predictions, aligning cash flow expectations with operational cycles (e.g., payroll, vendor payments, and receivables).

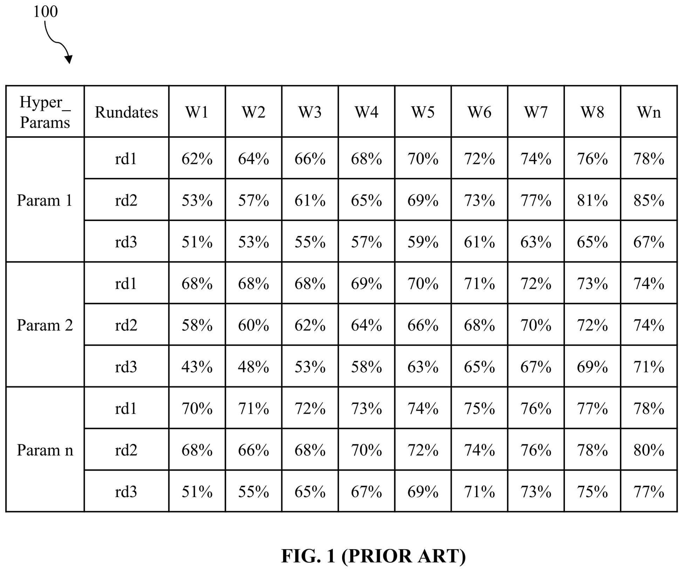

Conventional pro-rata redistribution process for redistributing the month-level cash flow to the week-level cash flow function based on evaluation metrics including at least one of: cumulative week wise and non-cumulative week wise metric. For example, **FIG. 1** is a tabular view 100 with an illustrative example depicting the accuracy of traditional pro-rata redistribution process that uses the cumulative week wise (e.g., Monday - Sunday) metric with multiple hyperparameters (1, 2, n). Though, the cumulative week wise metric helps to redistribute the month level cash flow to the week level cash flow, the metric does not focus on how the pro-rata are performing at a month level since the values are cumulative. Hence the accuracies are not satisfactory.

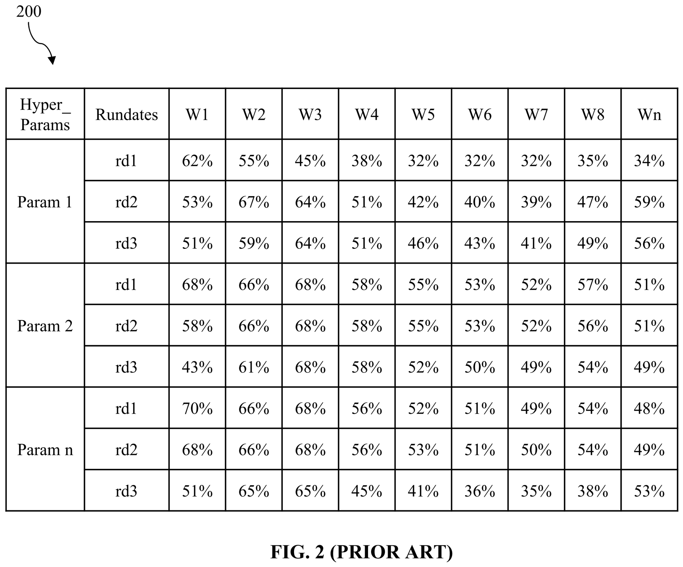

**FIG. 2** is a tabular view 200 with an illustrative example depicting the accuracy of traditional pro-rata redistribution process that uses the non-cumulative week wise metric. At a non-cumulative level, a week flow issue occurs as a plurality of rundates are evaluated. Also, at the non-cumulative level, if there is a pattern of accuracy in Wₙ for rd₁, the same pattern must be seen in W₍ₙ₋₁₎ for rd₂ and so on. However, these patterns aren't replicated fully in **FIG. 2****,** making the non-cumulative week wise metric not suitable for pro-rata evaluation.

Hence, there is a need for an improved machine learning based (ML-based) system and method for redistributing data in order to address the aforementioned issues.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) method for redistributing data, is disclosed. The ML-based method further comprises obtaining, by one or more hardware processors, an input data associated with actual bank cash from one or more data sources.

The ML-based method further comprises pre-processing, by the one or more hardware processors, the input data to generate pre-processed data.

The ML-based method further comprises predicting, by the one or more hardware processors, a month level data associated with the actual bank cash for a pre-determined horizon based on at least one of: historical cash flow data and seasonality, using one or more machine learning (ML) models on the pre-processed data.

The ML-based method further comprises redistributing, by the one or more hardware processors, at least one of: the month level data to week of month (WOM) level data and the WOM level data to day level data, based on a pro-rata configuration using one or more hyperparameters.

The ML-based method further comprises providing, by the one or more hardware processors, at least one of: the WOM level data and the day level data, redistributed from the month level data, as an output, to one or more users on one or more user interfaces associated with one or more electronic devices associated with the one or more users.

In an embodiment, pre-processing the input data comprises standardizing, by the one or more hardware processors, the input data by transforming the input data into an organized format being adaptable for performing an intelligent AI-inference process. In an embodiment, standardizing the input data comprises at least one of: standardizing one or more column names, converting date and numeric formats across one or more dataset fields, handling null records, standardizing one or more financial transactions by currency conversion, and removing one or more noises caused by an outlier data associated with the actual bank cash.

In another embodiment, redistributing the month level data to at least one of: the WOM level data and the WOM level data to day level data, comprises: (a) obtaining, by the one or more hardware processors, one or more continuous pre-processed datasets associated with the historical cash flow data, at the one or more ML models; (b) predicting, by the one or more hardware processors, the month level data associated with the actual bank cash for a month, based on the historical cash flow data of one or more previous months that precedes the month, using the one or more ML models with the one or more hyperparameters on the one or more continuous pre-processed datasets; (c) redistributing, by the one or more hardware processors, the predicted month level data associated with the actual bank cash of the month to at least one of: the WOM level data and the day level data, using the pro-rata configuration with the one or more hyperparameters; and (d) assessing, by the one or more hardware processors, an accuracy of at least one of: the one or more ML models and the one or more hyperparameters used by the one or more ML models, by comparing the redistributed at least one of: WOM level data and day level data, of the month, with actual data associated with the actual bank cash of the month.

In yet another embodiment, the ML-based method further comprises determining, by the one or more hardware processors, an optimized hyperparameter among the one or more hyperparameters in the pro-rata configuration for redistributing the month level data to at least one of: the WOM level data and the day level data. In an embodiment, determining the optimized hyperparameter comprises: (a) comparing, by the one or more hardware processors, a value of each hyperparameter of the one or more hyperparameters with a value of the actual ratio for each month of the one or more months, wherein the actual ratio is computed based on a total cash in the one or more weeks of the one or more months, being divided by a total cash in the one or more months of the actual bank cash; (b) computing, by the one or more hardware processors, a difference between the value of each hyperparameter of the one or more hyperparameters with the value of the actual ratio for each month of the one or more months; (c) selecting, by the one or more hardware processors, a hyperparameter having minimum difference, from the one or more hyperparameters; (d) repeating, by the one or more hardware processors, one or more processes comprising the comparison of the one or more hyperparameters with the actual ratio, computation of the difference between the one or more hyperparameters with the actual ratio, and selection of the one or more hyperparameters, until the input data associated with the actual bank cash are available; and (e) determining, by the one or more hardware processors, the one or more hyperparameters having an optimized number of minimum difference at the one or more weeks for the one or more months.

In yet another embodiment, the ML-based method further comprises: (a) applying, by the one or more hardware processors, the pro-rata configuration on forecast data associated with the actual bank cash; and (b) comparing, by the one or more hardware processors, the forecast data associated with the actual bank cash, with the historical cash flow data, to obtain optimized accuracy on the forecast data associated with the actual bank cash based on the pro-rata configuration applied on the forecast data associated with the actual bank cash.

In yet another embodiment, the ML-based method further comprises: (a) monitoring, by the one or more hardware processors, performance of the one or more ML models for a time duration; (b) determining, by the one or more hardware processors, whether the performance of the one or more ML models in predicting is below a threshold value based on comparison of the prediction with the actual bank cash; (c) fine-tuning, by the one or more hardware processors, the one on or more ML models and the one or more hyperparameters; and (d) evaluating, by the one or more hardware processors, the performance of the fine-tuned one or more ML models using a weighted average accuracy based on input data length for one or more horizons.

In yet another embodiment, the ML-based method further comprises: (a) evaluating, by the one or more hardware processors, the pro-rata configuration using difference of distribution ratio of the actual data and the pro-rata function of the actual data; (b) selecting, by the one or more hardware processors, one or more functions with minimum difference over a time duration of comparison process, to execute the pro-rata configuration on one or more forecasts; and (c) selecting, by the one or more hardware processors, an optimized function based on at least one of: accuracy and absolute percentage error, among the one or more functions.

In one aspect, a machine learning based (ML-based) system for redistributing data, is disclosed. The ML-based system includes one or more hardware processors and a memory coupled to the one or more hardware processors. The memory includes a plurality of subsystems in the form of programmable instructions executable by the one or more hardware processors.

The plurality of subsystems comprises a data obtaining subsystem configured to obtain an input data associated with actual bank cash from one or more data sources.

The plurality of subsystems further comprises a data pre-processing subsystem configured to pre-process the input data to generate pre-processed data.

The plurality of subsystems further comprises a data predicting subsystem configured to predict a month level data associated with the actual bank cash for a pre-determined horizon based on at least one of: historical cash flow data and seasonality, using one or more machine learning (ML) models on the pre-processed data.

The plurality of subsystems further comprises a data redistributing subsystem configured to redistribute at least one of: the month level data to week of month WOM level data and the WOM level data to day level data, based on a pro-rata configuration using one or more hyperparameters.

The plurality of subsystems further comprises an output subsystem configured to provide at least one of: the WOM level data and the day level data, redistributed from the month level data, as an output, to one or more users on one or more user interfaces associated with one or more electronic devices associated with the one or more users.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF DRAWINGS

The disclosure will be described and explained with additional specificity and detail with the accompanying figures in which:
**FIG.** 1 is a tabular view with an illustrative example depicting the accuracy of traditional pro-rata redistribution process that uses a cumulative week wise (e.g., Monday - Sunday) metric;
FIG. 2 is a tabular view with an illustrative example depicting the accuracy of traditional pro-rata redistribution process that uses a non-cumulative week wise metric;
FIG. 3 is a block diagram illustrating a computing environment with a machine learning based (ML-based) system for redistributing data, in accordance with an embodiment of the present disclosure;
**FIG.** 4 is a detailed view of the ML-based system for redistributing the data, in accordance with another embodiment of the present disclosure;
**FIG.** 5 is a high-level flow diagram of a pro-rata evaluation process, in accordance with another embodiment of the present disclosure;
**FIG.** 6 is a high-level flow diagram of the pro-rata evaluation process for redistributing the month level data to the week of month (WOM) level data, in accordance with another embodiment of the present disclosure;
**FIG.** 7A **and** **7B** a tabular view depicting a data frame of pro-rata evaluation metric for redistributing the month level data to the week of month (WOM) level data, in accordance with another embodiment of the present disclosure;
**FIG.** 8 is a graphical representation depicting an evaluation of a month level forecast obtained using a pro-rata configuration in comparison with one or more actuals, in accordance with another embodiment of the present disclosure;
**FIG.** 9 is a graphical representation depicting evaluation of the month level forecast obtained using the pro-rata configuration and the forecast obtained from conventional techniques in comparison with the actual bank cash, in accordance with another embodiment of the present disclosure; and
**FIG. 10** is a flow chart illustrating a machine-learning based (ML-based) method for redistributing the data, in accordance with an embodiment of the present disclosure;

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

Referring now to the drawings, and more particularly to FIG. 1 through FIG. 10, where similar reference characters denote corresponding features consistently throughout the figures, there are shown preferred embodiments and these embodiments are described in the context of the following exemplary system and/or method.

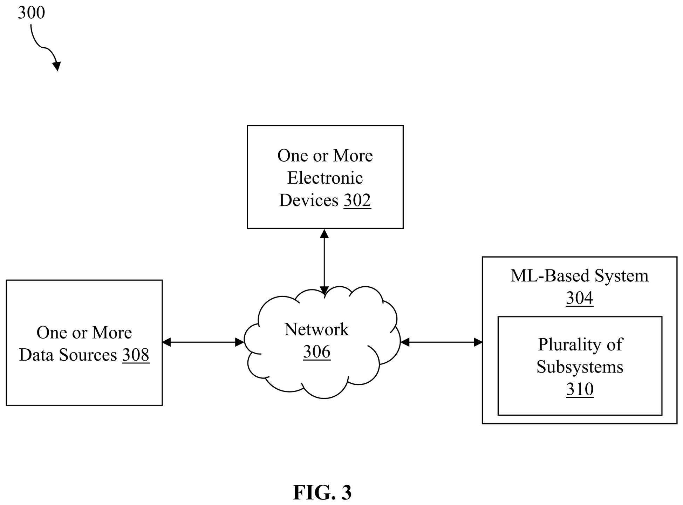

**FIG.** 3 is a block diagram illustrating a computing environment 300 with a machine learning based (ML-based) system 304 for redistributing data, in accordance with an embodiment of the present disclosure. According to FIG. 3, the computing environment 300 includes one or more electronic devices 302 that are communicatively coupled to the ML-based system 304 through a network 306. The one or more electronic devices 302 through which one or more users receive output results from the ML-based system 304.

The present invention is configured to redistribute at least one of: month level data to week of month (WOM) level data and the WOM level data to day level data. The ML-based system 304 is initially configured to obtain an input data associated with actual bank cash from one or more data sources 308. In an embodiment, the input data may be encrypted and decrypted by the ML-based system 304, so that one or more third party users cannot be authenticated to manipulate the input data.

The ML-based system 304 is further configured to pre-process the input data to generate pre-processed data. The ML-based system 304 is further configured to predict the month level data associated with the actual bank cash for a pre-determined horizon based on at least one of: historical cash flow data and seasonality, using one or more machine learning (ML) models on the pre-processed data. The ML-based system 304 is further configured to redistribute at least one of: the month level data to the WOM level data and the WOM level data to the day level data, based on a pro-rata configuration using one or more hyperparameters.

The ML-based system 304 is further configured to provide at least one of: the WOM level data and the day level data, redistributed from the month level data, as an output, to the one or more users on one or more user interfaces associated with the one or more electronic devices 302 associated with the one or more users.

In an embodiment, the one or more users may include at least one of: one or more data analysts, one or more business analysts, one or more cash analysts, one or more financial analysts, one or more collection analysts, one or more debt collectors, one or more professionals associated with cash and collection management, and the like. In an embodiment, the one or more business units may include at least one of: one or more customers, one or more organizations, one or more corporations, one or more parent companies, one or more subsidiaries, one or more joint ventures, one or more partnerships, one or more governmental bodies, one or more associations, and one or more legal entities, and the like.

The ML-based system 304 may be hosted on a central server including at least one of: a cloud server or a remote server. Further, the network 306 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more electronic devices 302 may include at least one of: a laptop computer, a desktop computer, a tablet computer, a Smartphone, a wearable device, a Smart watch, and the like.

Further, the computing environment 300 includes the one or more data sources 308 communicatively coupled to the ML-based system 304 through the network 306. In an embodiment, the one or more data sources 308 may store the one or more documents. In an embodiment, the one or more data sources 308 includes at least one of: one or more relational databases, one or more object-oriented databases, one or more data warehouses, one or more cloud-based databases, and the like. In another embodiment, a format of the data obtained from the one or more documents may include at least one of: a comma-separated values (CSV) format, a JavaScript Object Notation (JSON) format, an Extensible Markup Language (XML), spreadsheets, and the like.

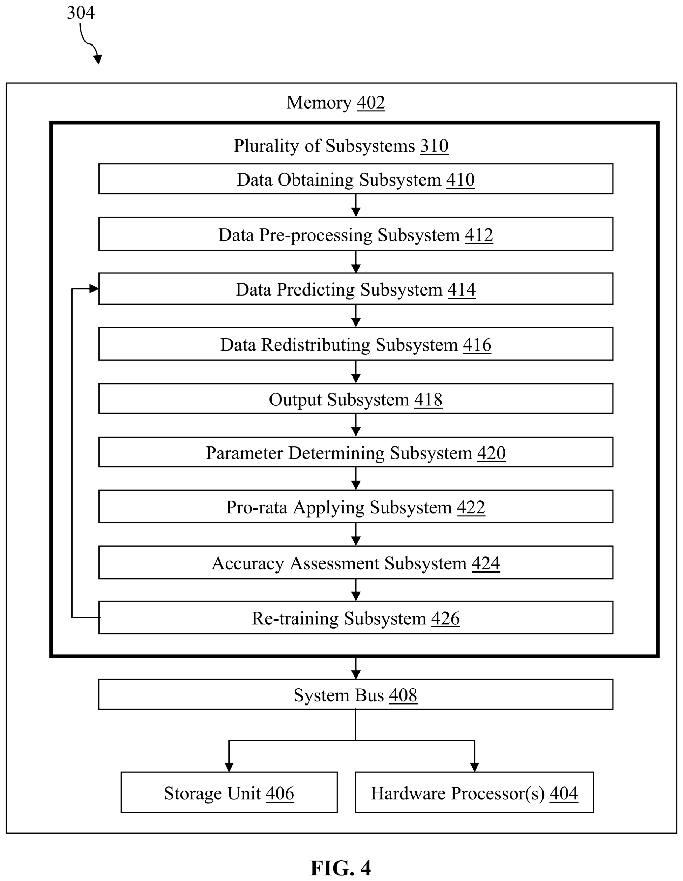

Furthermore, the one or more electronic devices 302 include at least one of: a local browser, a mobile application, and the like. Furthermore, the one or more end users may use a web application through the local browser, the mobile application to communicate with the ML-based system 304. In an embodiment of the present disclosure, the ML-based system 304 includes a plurality of subsystems 310. Details on the plurality of subsystems 310 have been elaborated in subsequent paragraphs of the present description with reference to **FIG. 4****.**

**FIG.** 4 is a detailed view of the ML-based system 304 for redistributing the data, in accordance with another embodiment of the present disclosure. The ML-based system 304 includes a memory 402, one or more hardware processors 404, and a storage unit 406. The memory 402, the one or more hardware processors 404, and the storage unit 406 are communicatively coupled through a system bus 408 or any similar mechanism. The memory 402 includes the plurality of subsystems 310 in the form of programmable instructions executable by the one or more hardware processors 404.

The plurality of subsystems 310 includes a data obtaining subsystem 410, a data pre-processing subsystem 412, a data predicting subsystem 414, a data redistributing subsystem 416, an output subsystem 418, a parameter determining subsystem 420, a pro-rata applying subsystem 422, an accuracy assessment subsystem 424, and a re-training subsystem 426. The brief details of the plurality of subsystems 310 have been elaborated in a below table.

| **Plurality of Subsystems 310** | **Functionality** |
|---|---|
| Data obtaining subsystem 410 | The data obtaining subsystem 410 is configured to obtain the input data associated with actual bank cash from the one or more data sources 308. |
| Data pre-processing subsystem 412 | The data pre-processing subsystem 412 is configured to pre-process the input data to generate the pre-processed data. |
| Data predicting subsystem 414 | The data predicting subsystem 414 is configured to predict the month level data associated with the actual bank cash for the pre-determined horizon based on at least one of: the historical cash flow data and seasonality, using the one or more machine learning (ML) models on the pre-processed data. |
| Data redistributing subsystem 416 | The data redistributing subsystem 416 is configured to redistribute at least one of: the month level data to week of month WOM level data and the WOM level data to the day level data, based on the pro-rata configuration using the one or more hyperparameters. |
| Output subsystem 418 | The output subsystem 418 is configured to provide at least one of: the WOM level data and the day level data, redistributed from the month level data, as the output, to the one or more users on the one or more user interfaces associated with the one or more electronic devices 302 associated with the one or more users. |
| Parameter determining subsystem 420 | The parameter determining subsystem 420 is configured to determine an optimized hyperparameter among the one or more hyperparameters in the pro-rata configuration for redistributing the month level data to at least one of: the WOM level data and the day level data. |
| Pro-rata applying subsystem 422 | The pro-rata applying subsystem 422 is configured to apply the pro-rata configuration on forecast data associated with the actual bank cash to obtain optimized accuracy on the forecast data associated with the actual bank cash. |
| Accuracy assessment subsystem 424 | The accuracy assessment subsystem 424 is configured to evaluate performance of fine-tuned one or more ML models using a weighted average accuracy based on input data length for one or more horizons. |
| Re-training subsystem 426 | The re-training subsystem 426 is configured to re-train the one or more ML models over a plurality of time intervals by adjusting the one or more hyperparameters, when an accuracy of the one or more ML models, is below a predetermined accuracy threshold value. |

The one or more hardware processors 404, as used herein, means any type of computational circuit, including, but not limited to, at least one of: a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 404 may also include embedded controllers, including at least one of: generic or programmable logic devices or arrays, application specific integrated circuits, single-chip computers, and the like.

The memory 402 may be non-transitory volatile memory and non-volatile memory. The memory 402 may be coupled for communication with the one or more hardware processors 404, being a computer-readable storage medium. The one or more hardware processors 404 may execute machine-readable instructions and/or source code stored in the memory 402. A variety of machine-readable instructions may be stored in and accessed from the memory 402. The memory 402 may include any suitable elements for storing data and machine-readable instructions, including at least one of: read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 402 includes the plurality of subsystems 310 stored in the form of machine-readable instructions on any of the above-mentioned storage media and may be in communication with and executed by the one or more hardware processors 404.

The storage unit 406 may be a cloud storage, a Structured Query Language (SQL) data store, a noSQL database or a location on a file system directly accessible by the plurality of subsystems 310.

The plurality of subsystems 310 includes the data obtaining subsystem 410 that is communicatively connected to the one or more hardware processors 404. The data obtaining subsystem 410 is configured to obtain the input data associated with the actual bank cash from the one or more data sources 308. In an embodiment, a pattern recognition based advanced forecast model may utilize the one or more input data comprising at least one of: actual bank cash data for the forecast horizon and forecast data for a backtesting period for one or more forecast models.

The plurality of subsystems 310 includes the data pre-processing subsystem 412 that is communicatively connected to the one or more hardware processors 404. The data pre-processing subsystem 412 is configured to pre-process the input data to generate the pre-processed data. In an embodiment, pre-processing the input data may include standardizing the data by transforming the input data (i.e., raw data) into a clean and an organized format being adaptable for performing an intelligent AI-inference process. In an embodiment, standardizing the input data may include at least one of: standardizing one or more column names, converting date and numeric formats across one or more dataset fields, handling null records, standardizing one or more financial transactions by currency conversion, and removing one or more noises by an outlier removal model.

The column name standardization by a column name standardization module is configured to determine whether one or more dataset headers including the input data having uniformity and clarity, providing seamless data analysis and interpretation of the input data. The input data is converted to a univariate timeseries with consistent names. The datetime and numeric conversion is configured to standardize date and numeric formats across the one or more data fields. The null records are imputed/dropped based on at least one of: one or more seasonal trends and an impact of the null records with one or more values (i.e., absolute amount values).

The currency conversion by a currency conversion module is configured to standardize one or more financial transactions based on one or more functional currencies of the one or more business units to synchronize transactional data across one or more sources, for consistency of the pipeline. The outlier removal model is configured to remove/filter the one or more outliers. The outlier bank cash adds noise in the process of intelligent pro-rata and the plurality of input AI-Models.

In an embodiment, the data pre-processing subsystem 412 is configured to obtain the data associated with the actual bank cash. The data pre-processing subsystem 412 is further configured to generate the data associated with the actual bank cash, into one or more continuous pre-processed datasets for prediction and redistribution processes. The data pre-processing subsystem 412 is configured to obtain the one or more continuous pre-processed datasets by performing time Series formatting, smoothening, feature engineering, and data transformation. Time series formatting is performed by organize the input data chronologically, ensuring it is in time series format. Smoothening is performed by methods like moving averages to reduce noise and highlight trends. Feature engineering is used to create relevant metrics, such as returns or volatility, to enhance analysis. Data Transformation involves application of transformation techniques, like log transformations, to stabilize variance and fill gaps using linear interpolation to ensure a smooth flow of pre-proceeded data.

The plurality of subsystems 310 includes the data predicting subsystem 414 that is communicatively connected to the one or more hardware processors 404. The data predicting subsystem 414 is configured to predict the month level data associated with the actual bank cash for the pre-determined horizon based on at least one of: the historical cash flow data and seasonality, using the one or more machine learning (ML) models on the pre-processed data. In an alternative embodiment, the historical cash flow data may be the pre-processed data associated with one or more previous months that precedes the pre-determined horizon for which the prediction is performed.

The plurality of subsystems 310 includes the data redistributing subsystem 416 that is communicatively connected to the one or more hardware processors 404. The data redistributing subsystem 416 is configured to redistribute at least one of: the month level data to week of month WOM level data and the WOM level data to day level data, based on the pro-rata configuration using the one or more hyperparameters.

For redistributing the month level data to at least one of: the WOM level data and the WOM level data to day level data, the data redistributing subsystem 416 is initially configured to obtain the one or more continuous pre-processed datasets associated with the historical cash flow data, at the one or more ML models. The data redistributing subsystem 416 is further configured to predict the month level data associated with the actual bank cash for a month, based on the historical cash flow data of one or more previous months that precedes the month, using the one or more ML models with the one or more hyperparameters on the one or more continuous pre-processed datasets.

The data redistributing subsystem 416 is further configured to redistribute the predicted month level data associated with the actual bank cash of the month to at least one of: the WOM level data and the day level data, using the pro-rata configuration with the one or more hyperparameters. The data redistributing subsystem 416 is further configured to assess an accuracy of at least one of: the one or more ML models and the one or more hyperparameters used by the one or more ML models, by comparing the redistributed at least one of: WOM level data and day level data, of the month, with actual data associated with the actual bank cash of the month.

The plurality of subsystems 310 includes the parameter determining subsystem 420 that is communicatively connected to the one or more hardware processors 404. The parameter determining subsystem 420 is configured to determine an optimized hyperparameter among the one or more hyperparameters in the pro-rata configuration for redistributing the month level data to at least one of: the WOM level data and the day level data. For determining the optimized hyperparameter, the parameter determining subsystem 420 is initially configured to compare a value of each hyperparameter of the one or more hyperparameters with a value of the actual ratio for each month of the one or more months. In an embodiment, the actual ratio is computed based on a total cash in the one or more weeks of the one or more months, being divided by a total cash in the one or more months of the actual bank cash.

The parameter determining subsystem 420 is further configured to compute a difference between the value of each hyperparameter of the one or more hyperparameters with the value of the actual ratio for each month of the one or more months. The parameter determining subsystem 420 is further configured to select a hyperparameter having minimum difference from the one or more hyperparameters.

The parameter determining subsystem 420 is further configured to repeat one or more processes comprising the comparison of the one or more hyperparameters with the actual ratio, computation of the difference between the one or more hyperparameters with the actual ratio, and selection of the one or more hyperparameters, until the input data associated with the actual bank cash are available. The parameter determining subsystem 420 is further configured to determine the one or more hyperparameters having an optimized number of minimum difference at the one or more weeks for the one or more months.

The plurality of subsystems 310 includes the output subsystem 418 that is communicatively connected to the one or more hardware processors 404. The output subsystem 418 is configured to provide at least one of: the WOM level data and the day level data, redistributed from the month level data, as the output, to the one or more users on the one or more user interfaces associated with the one or more electronic devices 302 associated with the one or more users. In an embodiment, the output may include a day level forecast for the upcoming 406 days in the functionally currency of one or more business units is saved in the S3 bucket. Further, an agent is configured to upload the content of a file into the one or more data sources 308.

The plurality of subsystems 310 includes the pro-rata applying subsystem 422 that is communicatively connected to the one or more hardware processors 404. The pro-rata applying subsystem 422 is configured to apply the pro-rata configuration on forecast data associated with the actual bank cash. The pro-rata applying subsystem 422 is further configured to compare the forecast data associated with the actual bank cash, with the historical cash flow data, to obtain optimized accuracy on the forecast data associated with the actual bank cash based on the pro-rata configuration applied on the forecast data associated with the actual bank cash.

The plurality of subsystems 310 includes the accuracy assessment subsystem 424 that is communicatively connected to the one or more hardware processors 404. The accuracy assessment subsystem 424 is initially configured to monitor performance of the one or more ML models for a time duration. The accuracy assessment subsystem 424 is further configured to determine whether the performance of the one or more ML models in predicting is below a threshold value based on comparison of the prediction with the actual bank cash.

The accuracy assessment subsystem 424 is further configured to fine-tune the one or more ML models and the one or more hyperparameters. The accuracy assessment subsystem 424 is further configured to evaluate the performance of the fine-tuned one or more ML models using a weighted average accuracy based on input data length for one or more horizons. In an embodiment, the weighted average accuracy is computed by subtracting an absolute percentage error value from one. In an embodiment, the Absolute Percentage Error is computed based on a combination of an absolute difference forecast and actual, which is divided by a forecasted value. For periods where the absolute difference between forecast and actual is greater than or equal to forecast or the actuals, the accuracy is assigned as 0%.

The accuracy assessment subsystem 424 is further configured to evaluate the pro-rata configuration using difference of distribution ratio of the actual data and the pro-rata function of the actual data. The accuracy assessment subsystem 424 is further configured to select one or more functions with minimum difference over a time duration of comparison process, to execute the pro-rata configuration on one or more forecasts. The accuracy assessment subsystem 424 is further configured to select an optimized function based on at least one of: accuracy and absolute percentage error, among the one or more functions.

The plurality of subsystems 310 includes the re-training subsystem 426 that is communicatively connected to the one or more hardware processors 404. The re-training subsystem 426 is configured to re-train the one or more ML models over the plurality of time intervals by adjusting the one or more hyperparameters, when the accuracy of the one or more ML models, is below the predetermined accuracy threshold value.

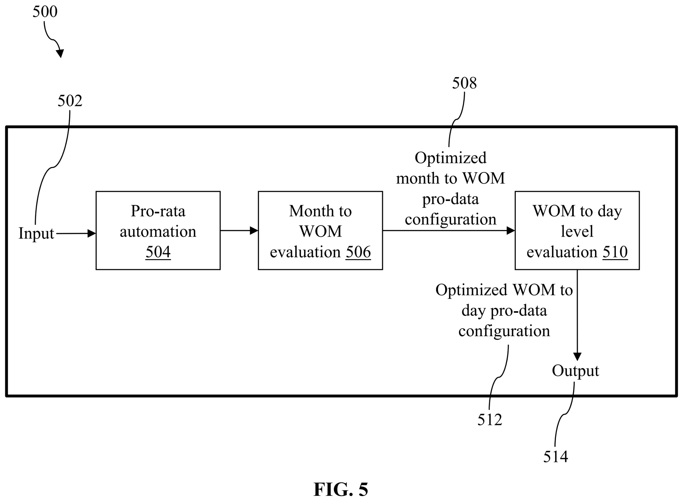

**FIG.** 5 is a high-level flow diagram 500 of the pro-rata evaluation process, in accordance with another embodiment of the present disclosure. The input data associated with the actual bank cash from the one or more data sources 308, as shown in 502. The month level data to WOM level data, is redistributed based on the pro-rata configuration (as shown in 504) using one or more hyperparameters, as shown in 506. The optimized pro-rata configuration with the optimized hyperparameter is selected for redistributing the month level data WOM level data, as shown in 508.

The WOM level data to day level data, is redistributed based on the pro-rata configuration using the one or more hyperparameters, as shown in 510. The optimized pro-rata configuration with the optimized hyperparameter is selected for redistributing the WOM level data to the day level data, as shown in 512. At least one of: the WOM level data and the day level data, redistributed from the month level data, is provided as the output, as shown in 514.

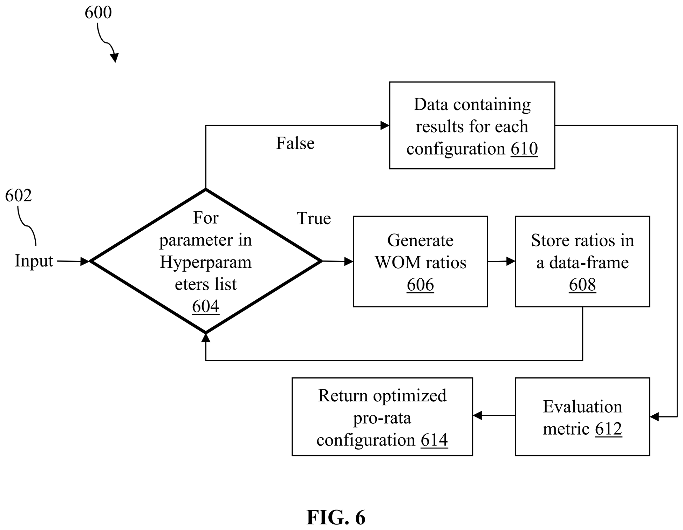

**FIG.** 6 is a high-level flow diagram of the pro-rata evaluation process for redistributing the month level data to the week of month (WOM) level data, in accordance with another embodiment of the present disclosure. The input data associated with the actual bank cash from the one or more data sources 308, as shown in 602. The input data associated with the actual bank cash is applied on the pro-rata configuration to redistribute the month level data to WOM level data, as shown in 604. The actual ratios are computed/generated for the one or more weeks of the one or more months, as shown in 606, and the computed actual ratios are stored in a data frame, as shown in 608. The process involving the computation of the difference between the value of each hyperparameter of the one or more hyperparameters with the value of the generated actual ratios is performed to obtain data including results for each pro-rata configuration, as shown in 610. The evaluation metric is assessed based on the results, as shown in 612. In an embodiment, the evaluation metric includes the data corresponding to each hyperparameter of the one or more hyperparameters for each month of the one or more months. The optimized pro-rata configuration with the optimized hyperparameter is selected based on the evaluation metric, as shown in 614. This means that the hyperparameter having the minimum difference is selected from the one or more hyperparameters for redistributing at least one of: the month level data to the WOM level data and the WOM level data to the day level data.

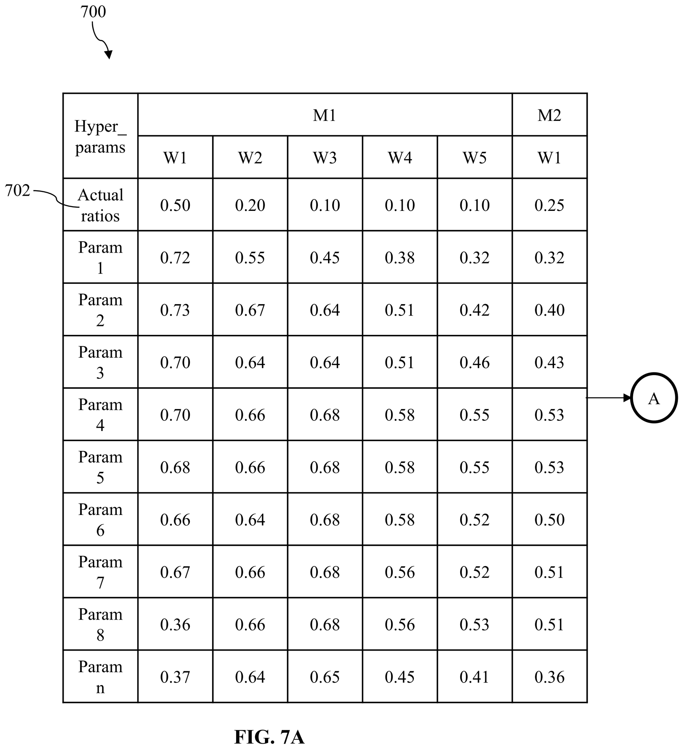

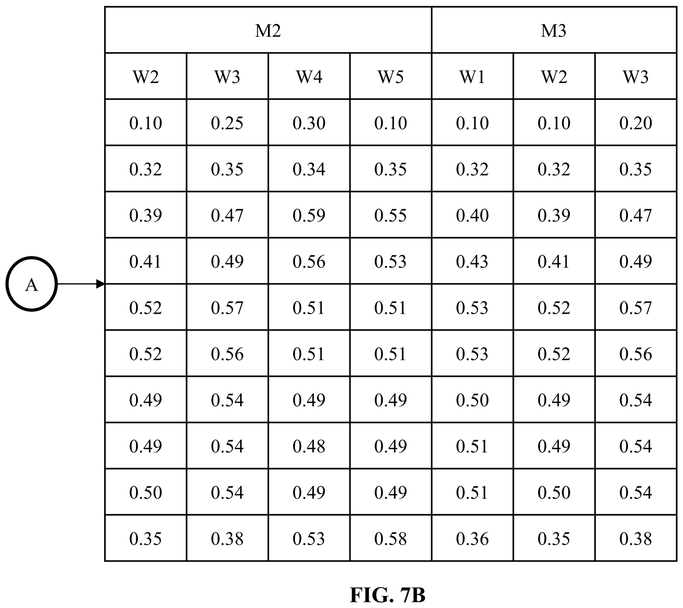

**FIG.** 7A **and** **7B** a tabular view 700 depicting a data frame of pro-rata evaluation metric for redistributing the month level data to the week of month (WOM) level data, in accordance with another embodiment of the present disclosure. The tabular view 700 shows the actual ratios 702 that are computed for each month of the one or more months. The evaluation occurs using the one or more actuals making the process module and forecast independent, thereby choosing the pro-rata configuration which is able to replicate the actual pattern. The evaluation is done at a month level to obtain the pro-rata configuration which is able to redistribute the actual bank cash approximately for the majority of months.

As shown in **FIG. 7A** **and** **7B****,** M1 to M3 represent one or more months. W1 to W5 represent one or more weeks of the one or more months, which include the month to WOM ratios generated as per the pro-rata configuration for each month. The actual ratios 702 are the real WOM ratios which are computed using the month's total. After creating the evaluation matrix as shown in **FIG.** 7A **and** **7B****,** each hyperparameter is evaluated against the actual ratios 702 for each month, and the parameters which are able to generate the WOM ratios closer to the actual ones most number of times is selected.

In an aspect, the working principle of the computation of the pro-rata evaluation metric, is as follows. Initially, the data associated with the actual bank cash are obtained. The data associated with the actual bank cash, are generated into one or more continuous datasets. The data associated with the actual bank cash are redistributed from month level to day level, based on the pro-rata configurations with the one or more hyperparameters. In an embodiment, each hyperparameter of the one or more hyperparameters of the pro-rata configurations includes the distributed data associated with the actual bank cash.

The day level data associated with the actual bank cash, are grouped based on one or more months until a point where the data associated with the actual bank cash are available. One or more weeks are defined as a predetermined percentage from a start of the one or more months, within a boundary of the one or more months. The actual ratio 702 is computed based on a total cash in the one or more weeks of the one or more months, being divided by a total cash in the one or more months of the actual bank cash.

The values in the rows (shown in **FIG. 7A** **and** 7B) corresponding to the hyperparameter 1 is the same as above step. The only change being the data used to do the computation is after the redistribution of the actual bank cash by the pro-rata configuration with hyperparameter 1. The values for the hyperparameter 1 is computed by dividing total cash in W1 of M1 of the prorated hyperparameter 1 of the actual bank cash by total cash in M1 of the actual bank cash. The pro-rata ensures that the total cash of the month never changes before and after the pro-rata. Hence the denominator is used the same as the bank actuals. The actual bank cash of the month is redistributed and the redistributed actual bank cash is compared to ensure that no forecasting error is introduced while computations of the distribution is done, which mimics the forecast having 100% accuracy while redistribution.

In order to determine the optimized hyperparameter, the parameters row having the most number of closest distribution match to the actual ratio 702. The difference between the value of each hyperparameter of the one or more hyperparameters with the value of the actual ratio 702 for each month of the one or more months. At the column order, the hyperparameter having the minimum difference in absolute magnitude terms and the optimized hyperparameter is selected from the list of the one or more hyperparameters. The one or more processes including at least one of: the comparison of the one or more hyperparameters with the actual ratio 702, computation of the difference between the one or more hyperparameters with the actual ratio 702, and selection of the one or more hyperparameters, is repeated until the input data associated with the actual bank cash are available. The one or more hyperparameters having an optimized number of minimum difference at the one or more weeks for the one or more months, are determined.

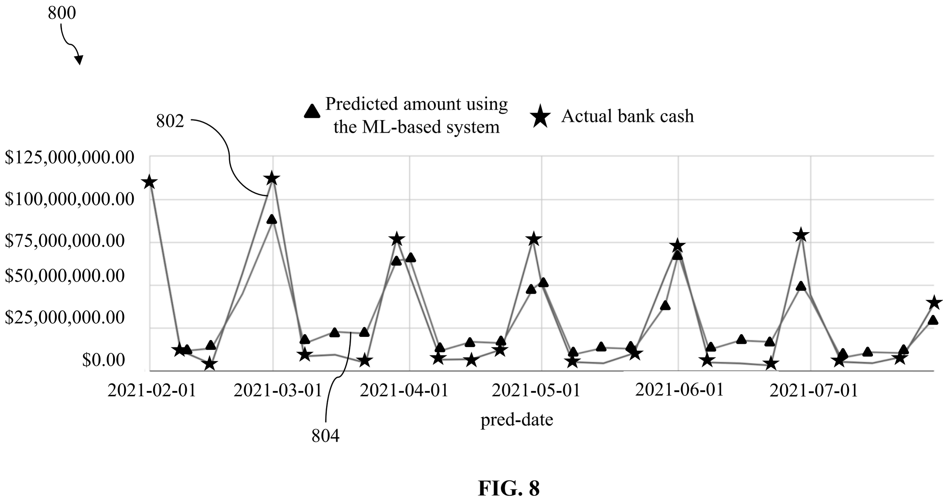

**FIG.** 8 is a graphical representation 800 depicting an evaluation of the month level forecast obtained using the pro-rata configuration in comparison with the one or more actuals, in accordance with another embodiment of the present disclosure. The graphical representation shows the similarity between the month level forecast (i.e., the predicted amount using the ML-based system 304) and the one or more actuals (i.e., the actual bank cash). The predicted amount 804 using the pro-rata configuration with the selected hyperparameter is compared with the one or more actuals 802 to determine the similarity between the predicted amount 804 and the one or more actuals 802, as depicted in the graphical representation 800. In other words, the predicted month level forecast is redistributed using the pro-rata WOM ratios and through the graphical representation 800, it is seen that the pro-rata WOM ratios can replicate the actual patterns as the redistribution curves (representing actual bank cash 802 and predicted amount 804) are similar.

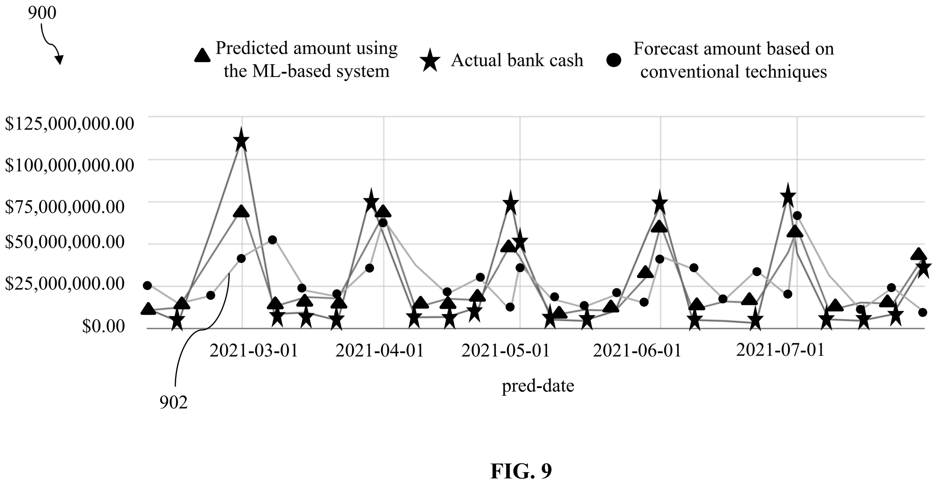

**FIG.** 9 is an graphical representation 900 depicting evaluation of the month level forecast obtained using the pro-rata configuration and the forecast obtained from conventional techniques in comparison with the actual bank cash, in accordance with another embodiment of the present disclosure. The graphical representation 900 depicts that the comparison of the month level forecast obtained using the pro-rata configuration with the actual bank cash, provides one or more results similar to one or more results caused by the comparison of the forecast obtained from the conventional techniques with the one or more actual bank cash. The similarity between the one or more results provided by the pro-rata configuration and the one or more results from the conventional forecast techniques, making the pro-rata configuration independent to the forecast techniques.

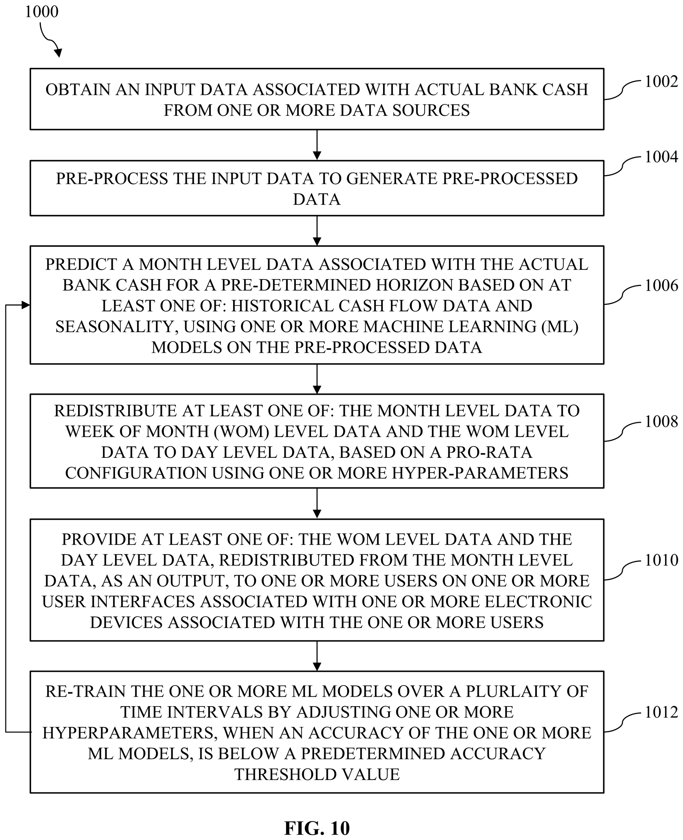

**FIG. 10** is a flow chart illustrating a machine-learning based (ML-based) method 1000 for redistributing the data, in accordance with an embodiment of the present disclosure.

At step 1002, the input data associated with the actual bank cash are obtained from the one or more data sources 308.

At step 1004, the input data are pre-processed to generate the pre-processed data.

At step 1006, the month level data associated with the actual bank cash are predicted for the pre-determined horizon based on at least one of: the historical cash flow data and seasonality, using the one or more machine learning (ML) models on the pre-processed data.

At step 1008, at least one of: the month level data to the week of month (WOM) level data and the WOM level data to the day level data, are redistributed based on the pro-rata configuration using the one or more hyperparameters.

At step 1010, at least one of: the WOM level data and the day level data, redistributed from the month level data, are provided as the output, to the one or more users on the one or more user interfaces associated with the one or more electronic devices 302 associated with the one or more users.

At step 1012, the one or more ML models are re-trained over the plurality of time intervals by adjusting the one or more hyperparameters, when the accuracy of the ML models, is below the predetermined accuracy threshold value.

The present invention has following advantages. The primary purpose of the present invention with the ML-based system 304 is to redistribute the month level data to the WOM level data and the WOM level data to the day level data. The present invention is configured to mitigate an issue of early/delayed forecast of cash at week level leading to visual discrepancy at day or week level causing reduced accuracy at week level.

The present invention with the ML-based system 304 is configured to replace manual intervention of deciding the grouping factor of weeks i.e., front to back and the vice-versa and to determine the accuracy of actuals being distributed with respect to the actuals instead of the forecast. With the minimized human intervention, the selection of the auto pro-rata configurations for any forecast makes the ML-based system 304 time efficient. The evaluation process occurs using the one or more actuals making the ML-based system 304 forecasting accuracy independent and runtime efficient.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based system 304 either directly or through intervening I/O controllers. Network adapters may also be coupled to the ML-based system 304 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based system 304 in accordance with the embodiments herein. The ML-based system 304 herein comprises at least one processor or central processing unit (CPU). The CPUs are interconnected via the system bus 408 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based system 304. The ML-based system 304 can read the inventive instructions on the program storage devices and follow these instructions to execute the methodology of the embodiments herein.

The ML-based system 304 further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that are issued on an application based here on. Accordingly, the embodiments of the present invention are intended to be illustrative, but not limiting, of the scope of the invention, which is set forth in the following claims.

## Claims

1. A machine-learning based (ML-based) method for automatically redistributing data, the ML-based method comprising:
obtaining, by one or more hardware processors, an input data associated with actual bank cash from one or more data sources;
pre-processing, by the one or more hardware processors, the input data to generate pre-processed data;
predicting, by the one or more hardware processors, a month level data associated with the actual bank cash for a pre-determined horizon based on at least one of: historical cash flow data and seasonality, using one or more machine learning (ML) models on the pre-processed data;
redistributing, by the one or more hardware processors, at least one of: the month level data to week of month (WOM) level data and the WOM level data to day level data, based on a pro-rata configuration using one or more hyperparameters; and
providing, by the one or more hardware processors, at least one of: the WOM level data and the day level data, redistributed from the month level data, as an output, to one or more users on one or more user interfaces associated with one or more electronic devices associated with the one or more users.

2. The ML-based method of claim 1, wherein pre-processing the input data comprises standardizing, by the one or more hardware processors, the input data by transforming the input data into an organized format being adaptable for performing an intelligent AI-inference process,
wherein standardizing the input data comprises at least one of: standardizing one or more column names, converting date and numeric formats across one or more dataset fields, handling null records, standardizing one or more financial transactions by currency conversion, and removing one or more noises caused by an outlier data associated with the actual bank cash.

3. The ML-based method of claim 1, wherein redistributing the month level data to at least one of: the WOM level data and the WOM level data to day level data, comprises:
obtaining, by the one or more hardware processors, one or more continuous pre-processed datasets associated with the historical cash flow data, at the one or more ML models;
predicting, by the one or more hardware processors, the month level data associated with the actual bank cash for a month, based on the historical cash flow data of one or more previous months that precedes the month, using the one or more ML models with the one or more hyperparameters on the one or more continuous pre-processed datasets;
redistributing, by the one or more hardware processors, the predicted month level data associated with the actual bank cash of the month to at least one of: the WOM level data and the day level data, using the pro-rata configuration with the one or more hyperparameters; and
assessing, by the one or more hardware processors, an accuracy of at least one of: the one or more ML models and the one or more hyperparameters used by the one or more ML models, by comparing the redistributed at least one of: WOM level data and day level data, of the month, with actual data associated with the actual bank cash of the month.

4. The ML-based method of claim 2, further comprising determining, by the one or more hardware processors, an optimized hyperparameter among the one or more hyperparameters in the pro-rata configuration for redistributing the month level data to at least one of: the WOM level data and the day level data, wherein determining the optimized hyperparameter comprises:
comparing, by the one or more hardware processors, a value of each hyperparameter of the one or more hyperparameters with a value of the actual ratio for each month of the one or more months, wherein the actual ratio is computed based on a total cash in the one or more weeks of the one or more months, being divided by a total cash in the one or more months of the actual bank cash;
computing, by the one or more hardware processors, a difference between the value of each hyperparameter of the one or more hyperparameters with the value of the actual ratio for each month of the one or more months;
selecting, by the one or more hardware processors, a hyperparameter having minimum difference, from the one or more hyperparameters;
repeating, by the one or more hardware processors, one or more processes comprising the comparison of the one or more hyperparameters with the actual ratio, computation of the difference between the one or more hyperparameters with the actual ratio, and selection of the one or more hyperparameters, until the input data associated with the actual bank cash are available; and
determining, by the one or more hardware processors, the one or more hyperparameters having an optimized number of minimum difference at the one or more weeks for the one or more months.

5. The ML-based method of claim 1, further comprising:
applying, by the one or more hardware processors, the pro-rata configuration on forecast data associated with the actual bank cash; and
comparing, by the one or more hardware processors, the forecast data associated with the actual bank cash, with the historical cash flow data, to obtain optimized accuracy on the forecast data associated with the actual bank cash based on the pro-rata configuration applied on the forecast data associated with the actual bank cash.

6. The ML-based method of claim 4, further comprising:
monitoring, by the one or more hardware processors, performance of the one or more ML models for a time duration;
determining, by the one or more hardware processors, whether the performance of the one or more ML models in predicting is below a threshold value based on comparison of the prediction with the actual bank cash;
fine-tuning, by the one or more hardware processors, the one on or more ML models and the one or more hyperparameters; and
evaluating, by the one or more hardware processors, the performance of the fine-tuned one or more ML models using a weighted average accuracy based on input data length for one or more horizons.

7. The ML-based method of claim 1, further comprising:
evaluating, by the one or more hardware processors, the pro-rata configuration using difference of distribution ratio of the actual data and the pro-rata function of the actual data;
selecting, by the one or more hardware processors, one or more functions with minimum difference over a time duration of comparison process, to execute the pro-rata configuration on one or more forecasts; and
selecting, by the one or more hardware processors, an optimized function based on at least one of: accuracy and absolute percentage error, among the one or more functions.

8. A machine learning based (ML-based) system for automatically redistributing data, the ML-based system comprising:
one or more hardware processors;
a memory coupled to the one or more hardware processors, wherein the memory comprises a plurality of subsystems in form of programmable instructions executable by the one or more hardware processors, and wherein the plurality of subsystems comprises:
a data obtaining subsystem configured to obtain an input data associated with actual bank cash from one or more data sources;
a data pre-processing subsystem configured to pre-process the input data to generate pre-processed data;
a data predicting subsystem configured to predict a month level data associated with the actual bank cash for a pre-determined horizon based on at least one of: historical cash flow data and seasonality, using one or more machine learning (ML) models on the pre-processed data;
a data redistributing subsystem configured to redistribute at least one of: the month level data to week of month WOM level data and the WOM level data to day level data, based on a pro-rata configuration using one or more hyperparameters; and
an output subsystem configured to provide at least one of: the WOM level data and the day level data, redistributed from the month level data, as an output, to one or more users on one or more user interfaces associated with one or more electronic devices associated with the one or more users.

9. The ML-based system of claim 8, wherein in pre-processing the input data, the data pre-processing subsystem is configured to standardize the input data by transforming the input data into an organized format being adaptable for performing an intelligent AI-inference process,
wherein standardizing the input data comprises at least one of: standardizing one or more column names, converting date and numeric formats across one or more dataset fields, handling null records, standardizing one or more financial transactions by currency conversion, and removing one or more noises caused by an outlier data associated with the actual bank cash.

10. The ML-based system of claim 8, wherein in redistributing the month level data to at least one of: the WOM level data and the WOM level data to day level data, the data redistributing subsystem is configured to:
obtain one or more continuous pre-processed datasets associated with the historical cash flow data, at the one or more ML models;
predict the month level data associated with the actual bank cash for a month, based on the historical cash flow data of one or more previous months that precedes the month, using the one or more ML models with the one or more hyperparameters on the one or more continuous pre-processed datasets;
redistribute the predicted month level data associated with the actual bank cash of the month to at least one of: the WOM level data and the day level data, using the pro-rata configuration with the one or more hyperparameters; and
assess an accuracy of at least one of: the one or more ML models and the one or more hyperparameters used by the one or more ML models, by comparing the redistributed at least one of: WOM level data and day level data, of the month, with actual data associated with the actual bank cash of the month.

11. The ML-based system of claim 9, further comprising a parameter determining subsystem configured to determine an optimized hyperparameter among the one or more hyperparameters in the pro-rata configuration for redistributing the month level data to at least one of: the WOM level data and the day level data, wherein in determining the optimized hyperparameter, the parameter determining subsystem is configured to:
compare a value of each hyperparameter of the one or more hyperparameters with a value of the actual ratio for each month of the one or more months, wherein the actual ratio is computed based on a total cash in the one or more weeks of the one or more months, being divided by a total cash in the one or more months of the actual bank cash;
compute a difference between the value of each hyperparameter of the one or more hyperparameters with the value of the actual ratio for each month of the one or more months;
select a hyperparameter having minimum difference from the one or more hyperparameters;
repeat one or more processes comprising the comparison of the one or more hyperparameters with the actual ratio, computation of the difference between the one or more hyperparameters with the actual ratio, and selection of the one or more hyperparameters, until the input data associated with the actual bank cash are available; and
determine the one or more hyperparameters having an optimized number of minimum difference at the one or more weeks for the one or more months.

12. The ML-based system of claim 8, further comprising a pro-rata applying subsystem configured to:
apply the pro-rata configuration on forecast data associated with the actual bank cash; and
compare the forecast data associated with the actual bank cash, with the historical cash flow data, to obtain optimized accuracy on the forecast data associated with the actual bank cash based on the pro-rata configuration applied on the forecast data associated with the actual bank cash.

13. The ML-based system of claim 11, further comprising an accuracy assessment subsystem configured to:
monitor performance of the one or more ML models for a time duration;
determine whether the performance of the one or more ML models in predicting is below a threshold value based on comparison of the prediction with the actual bank cash;
fine-tune the one or more ML models and the one or more hyperparameters; and
evaluate the performance of the fine-tuned one or more ML models using a weighted average accuracy based on input data length for one or more horizons.

14. The ML-based system of claim 8, wherein the accuracy assessment subsystem is further configured to:
evaluate the pro-rata configuration using difference of distribution ratio of the actual data and the pro-rata function of the actual data;
select one or more functions with minimum difference over a time duration of comparison process, to execute the pro-rata configuration on one or more forecasts; and
select an optimized function based on at least one of: accuracy and absolute percentage error, among the one or more functions.
